# EUROPEAN PATENT APPLICATION

(11) **EP 2 241 518 A2**
(43) Date of publication of application: **20.10.2010**
(21) Application number: 10160077.3
(22) Date of filing: 15.04.2010
(51) Int. Cl.: B65D 83/14

(54) **Manual spray cleaner package**

(30) Priority: 15.04.2009 US 169525 P
(71) Applicant: Bissell Homecare, Inc., Grand Rapids, MI 49544 (US)
(72) Inventor: Hansen, Eric J., Ada, MI 49301 (US); Barr, Christopher D., Belmont, MI 49306 (US); Jasch, Mary, Grand Rapids, MI 49505 (US); Nemcek, Romaneerat, Grand Rapids, MI 49506 (US)
(74) Representative: Schaumburg, Thoenes, Thurn, Landskron, Eckert

(57) **Abstract**

A disinfecting solution package comprising a dispensing container (22) having a body (24) with a closed bottom (26) and an open upper end (28) forming a neck (29) and a dispensing valve mounted (50) in the neck. A flexible pouch (74) is mounted within the container and has an open upper end that is sealed to the dispensing valve. A disinfecting composition containing a disinfecting agent is stored in the flexible pouch (74). A pressurized (98) gas is between the container body (24) and the flexible pouch (74) to pressurize the disinfecting solution (96) within the flexible pouch (74).

## Description

### BACKGROUND

Disinfectants are often used in cleaning solutions to eliminate or reduce microorganisms on surfaces such as floors, countertops, toys, bathtubs, etc. There are several different types of disinfecting compounds such as alcohols, aldehydes, oxidizing agents, quaternary ammonium compounds and biguanide polymers, for example. The different types of disinfecting compounds have varying degrees of effectiveness against a variety of microorganisms. Sodium hypochlorite is an example of one type of disinfecting compound that is commonly used to disinfect household surfaces due to its broad range of effectiveness.

[0001] Disinfecting agents such as hypochlorite and quaternary ammonium compounds can present challenges in terms of storage and ease of use for consumers. All disinfecting solutions sold in the United States are required to be registered with the US Environmental Protection Agency (EPA), which involves costly and time consuming proof of efficacy and stability. The majority of disinfecting solutions comprising quaternary ammonium compounds are registered in non-aerosol formulas since it is easier to achieve and demonstrate EPA's efficacy and stability requirements in plastic containers rather than the metal containers typically used for aerosol products. Disinfecting solutions comprising hypochlorites are also typically registered in plastic containers. Hypochlorites can react with traditional aerosol dispenser metals, thus decreasing the efficacy of the disinfecting solution. In addition, the hypochlorite solution can corrode the metal container and generate hydrogen gas that can generate high pressures within the container which can create a safety hazard for the consumer. For these reasons, disinfecting solutions comprising hypochlorite and quaternary ammonium compounds are typically stored in plastic containers, thus limiting the type of dispensers that can be used to dispense the solution.
Hypochlorite and quaternary ammonium compounds are typically held in plastic containers and often limited to trigger or pump-type spray dispensers and are not available in pressurized dispensers. A pressurized dispenser can provide a number of benefits over other types of dispensers such as ease of use, thorough coverage and the ability to dispense the solution at any angle. This feature can decrease strain on the user during use, which can be beneficial in industrial and institutional settings, such as a janitorial service, where a user may spend long periods of time cleaning and disinfecting surfaces.

### SUMMARY OF AN EMBODIMENT OF THE INVENTION

According to the invention a disinfecting solution package comprises a dispensing container having a body with a closed bottom and an open upper end forming a neck and a dispensing valve mounted in the neck. A flexible pouch is mounted within the container and has an open upper end that is sealed to the dispensing valve. A disinfecting composition containing a disinfecting agent is provided in the flexible pouch. A pressurized gas is located between the container body and the flexible pouch to pressurize the disinfecting solution within the flexible pouch.

According to one embodiment of the invention, the flexible pouch is chemically inert with respect to the disinfecting agent. The flexible pouch can comprise multiple laminated layers, one of which can be a metallic layer. The flexible pouch can further include at least one polyamide layer, at least one polyethylene terephthalate layer and at least one polypropylene layer. The flexible pouch can further comprise an adhesive between at least two of the layers.

According to another embodiment of the invention, the flexible pouch can comprise multiple laminated layers comprising a) a polyethylene terephthalate layer; b) an aluminum layer; c) a polyamide layer; d) a polypropylene layer; and e) an adhesive layer between each of the layers a, b, c and d.

According to yet another embodiment of the invention, the disinfecting agent is selected from the group consisting of hypochlorite and quaternary ammonium compounds.

According to another embodiment, the disinfecting solution package can comprise at lest one of an aqueous carrier, a surfactant, a biodegradable surfactant, an organic solvent and mixtures thereof.

According to another embodiment, the disinfecting solution package can be free of volatile organic compounds.

According to another embodiment of the invention, the pressurized gas can be free of volatile organic compounds. The pressurized gas can be air or nitrogen.

Further, according to the invention, a method for making a disinfecting solution package comprises sealing a flexible pouch having an open end to a dispensing valve and positioning the flexible pouch within an open top container with the dispensing valve in registry with the open top of the container to provide a space between the flexible pouch and an inside surface of the container. The dispensing valve is sealed to the open top of the container. A gas is injected into the space between the flexible pouch and an inside surface of the container to pressurize the space. The flexible pouch is then filled with a cleaning solution containing a disinfecting agent.

### BRIEF DESCRIPTION OF THE DRAWINGS

In the drawings:
FIG. 1 is a perspective view of a pressurized dispenser assembly according to the invention.
FIG. 2 is an exploded view of the pressurized dispenser assembly shown in FIG. 1.
FIG. 3 is a cut-away perspective view of a cap of the dispenser assembly shown in FIG. 1.
FIG. 4 is a partial section view taken along line 4-4 of FIG. 1.
FIG. 5 is a perspective view of a pouch-on-valve assembly of the dispenser assembly shown in FIG 2.
FIG. 6 is an exploded view of a valve assembly of the dispenser assembly shown in FIG. 2.
FIG. 7 is a partial section view taken along line 7-7 of FIG. 2.
FIG. 8 is a section view taken along line 8-8 of FIG. 2.
FIG. 9 is a schematic flow diagram of a method of making a disinfecting solution package according to the invention.
FIG. 10 is a view like FIG. 4 of a partial section view of the pressurized dispenser of FIG.1 illustrating the operation of the dispenser.

### DESCRIPTION OF AN EMBODIMENT OF THE INVENTION

According to the invention, a pressurized dispenser for applying a disinfecting composition containing a disinfectant onto a surface to be cleaned is provided. The disinfecting composition preferably contains sodium hypochlorite. The use of sodium hypochlorite in a pressurized disinfecting composition creates challenges with respect to maximizing shelf life while minimizing the effects of the inherent reactive nature of the chemical. Specific dispenser design features can be used to store and dispense a pressurized disinfecting composition as will be described fully herein.

### Pressurized Dispenser

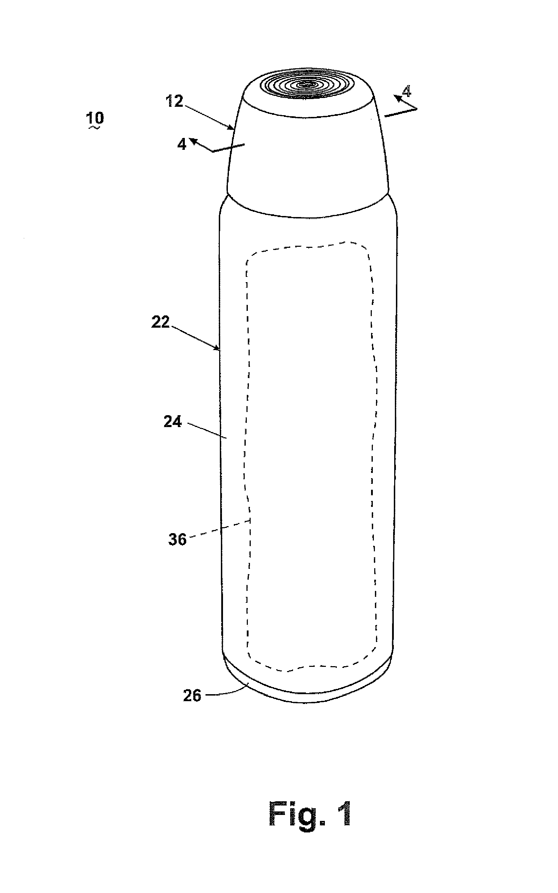

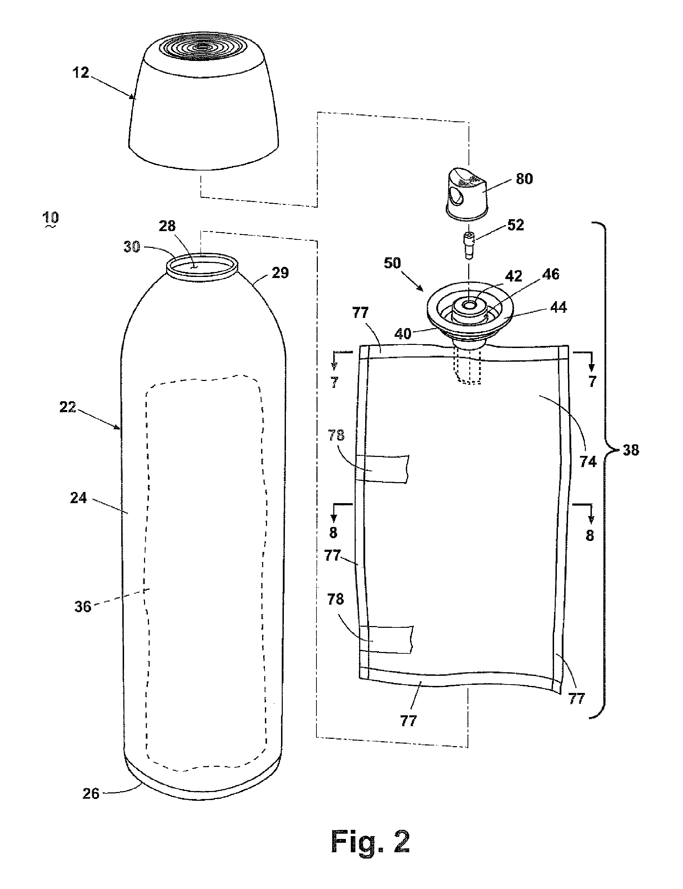

Referring to FIGS. 1 and 2, a pressurized dispenser 10 comprises a container 22, a pouch-on-valve assembly 38 for storing a disinfecting composition and regulating its dispensing, an actuator 80 operably coupled to the pouch-on-valve assembly 38 for selectively dispensing the disinfecting composition onto the surface to be cleaned, and a removable cap 12 that is selectively placed on the container 22 to cover the actuator 80. The pouch-on-valve assembly 38 comprises a pouch 74 received within the container 22 for storing a supply of disinfecting composition and a valve assembly 50 that is hermetically sealed to the pouch 74 and on which the actuator 80 is mounted. The valve assembly further comprises a valve mounting cup 40 that mounts the pouch-on-valve assembly 38 to the container 22.

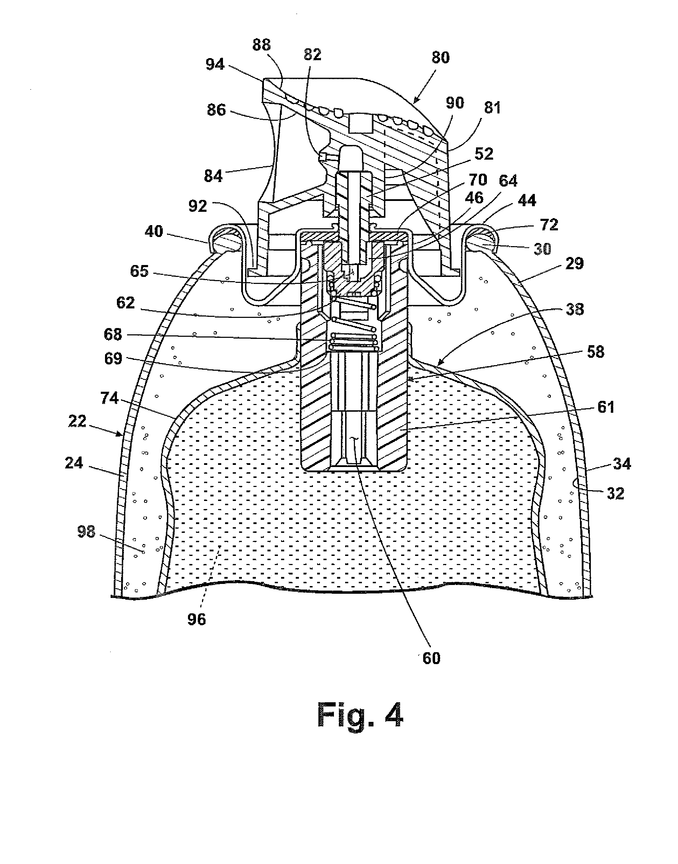

Referring to FIG. 4, a disinfecting composition 96 is contained within the pouch 74, and a quantity of compressed propellant gas 98 is contained within the can assembly 22 surrounding the pouch 74 to provide propellant force necessary to dispense the disinfecting composition 96 from the dispenser 10.

The disinfecting composition 96 is delivered to the surface to be cleaned via the actuator 80, which is in fluid communication with the push valve assembly 50 that is sealed to the flexible pouch 74 containing the disinfecting composition. The flexible pouch 74 containing the disinfecting composition 96 resides within the metal can assembly 22. Positive pressure inside the can assembly 22 is generated by the propellant gas 98 that is injected during the can filling process. The propellant gas 98 is filled to a level sufficient for generating the required force to deliver the disinfecting composition 96 to the surface to be cleaned with a spray character, i.e. the force of the spray, the diameter of the spray, the type of particle sprayed, etc. that is desirable for the intended application.

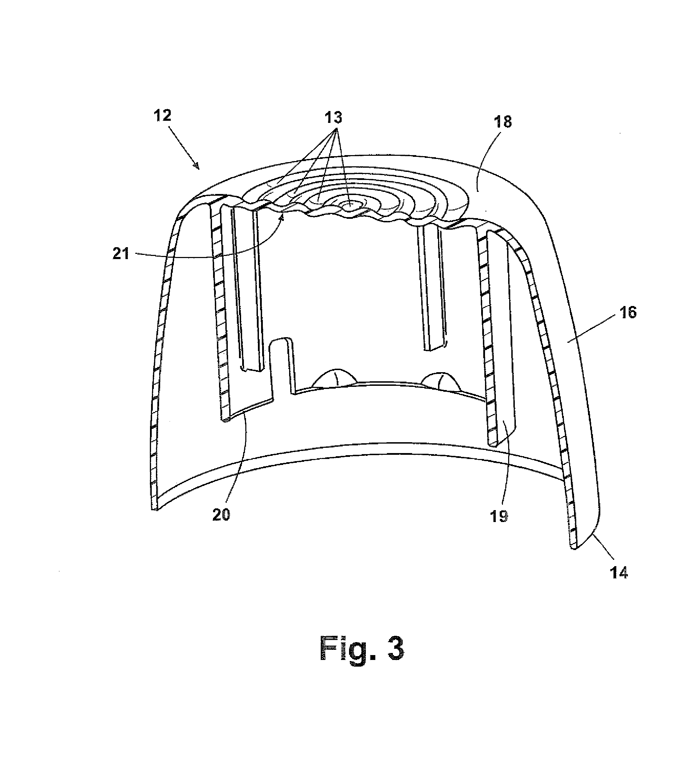

With reference to FIG. 3, the cap 12 comprises a circular-shaped bottom edge 14 with a vertical wall 16 extending therefrom that curves inwardly to form a top surface 18. An inner vertical wall 19 spaced from the vertical wall 16 can project from the top surface 18 and define an inner circular-shaped bottom edge 20.

The top surface 18 has a smaller diameter than the diameter of the bottom edge 14 by virtue of the inwardly curved vertical wall 16. The top surface 18 is generally planar but can also include a plurality of concentric circular depressions 13. As can been seen in FIG. 3, a sinusoidal wave pattern 21 is formed in cross-section by the circular depressions 13.

The cap 12 can be manufactured from plastic, such as recyclable polypropylene resin, using injection molding. The cap 12 can be thin-walled, as compared to commonly known aerosol cap wall thicknesses, with a nominal wall thickness of 0.79 mm (0.031 inches) and a range of 0.53 to 1.04 mm (0.021 to 0.041 inches) to minimize plastic material content resulting in a reduced part weight. The depressions 13 can have a nominal depth of 0.91 mm (0.036 inches) and a range of 0.66 to 1.17 mm (0.026 to 0.046 inches).

One benefit offered by the aforementioned cap geometry is that the cap 12 can be stacked with other caps 12 such that a substantial portion of the vertical wall 16 overlaps the cap 12 underneath, thus reducing the overall height of a nested stack of caps 12. The inward curve of the vertical wall 16 can be selected such that a first cap 12 can be nested with a second cap 12 such that the inner bottom edge 20 of the second cap 12 rests on the top surface 18 of the first cap 12. This is particularly beneficial when packing and shipping multiple caps 12, because the bulk container packing density of the caps 12 can be maximized, thereby reducing the shipping volume and overall energy costs associated with bulk shipping to a facility for the final filling and assembly of the dispenser 10.

Referring to FIGS. 2, and 4, the container 22 comprises a body 24 that is generally cylindrical in shape with a closed bottom 26 and an open upper end 28 formed in an inwardly curving neck 29 of the body 24. The neck 29 further comprises a bead 30 defining the periphery of the open upper end 28. The container 22 includes an inner surface 32 and an outer surface 34 on which a polymer coating can be applied. The container 22 may also include an optional lithograph label 36 applied to the outer can surface 32 for decorative purposes such as product use and marketing communications. The container 22 can be manufactured of polymer-coated tin free steel stock T3CA temper with a nominal thickness of about 0.23mm (0.009 inches). The polymer coating on the inner and outer surfaces 32 and 34 can comprise polyethylene terephthalate (PET) film which offers an improved aesthetic appearance and may also provide corrosion inhibiting properties.

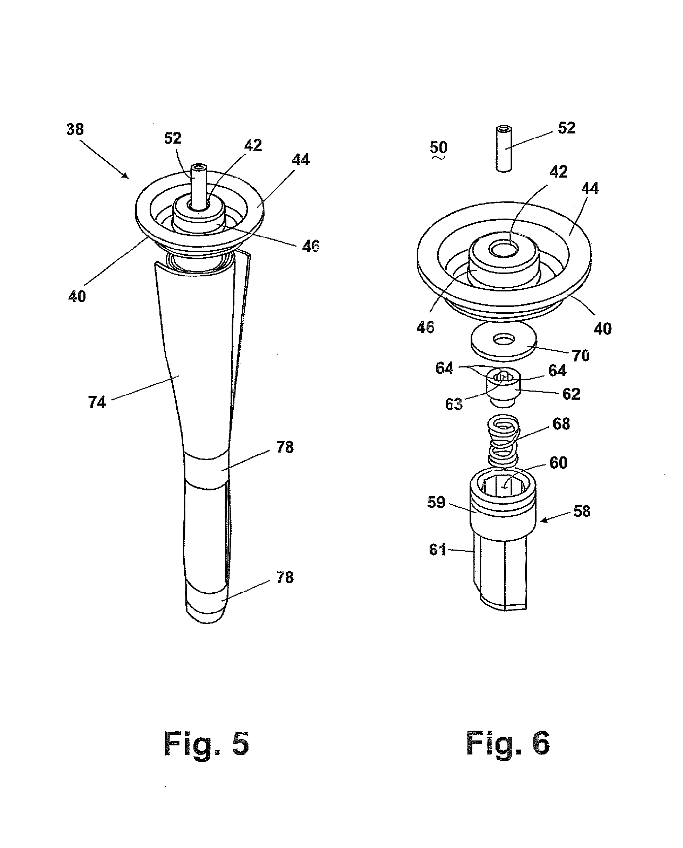

Referring to FIGS. 4 and 5, the valve mounting cup 40 is mounted within the open end 28 of the container 22 to mount the pouch-on-valve assembly 38 within the container 22 and to close the open end 28. The valve mounting cup 40 comprises a central cylindrical protrusion 46 having a dispensing opening 42 therein and an annular lip 44 formed on the periphery of the valve mounting cup 40. The annular lip 44 is sized to receive and seal the open end 28 of the container 22. The annular lip 44 further includes a gasket 72 to insure a leak proof seal to the bead 30 formed on the container 22. The valve mounting cup 40 can be manufactured of a tin steel material. The gasket 72 can be comprised of a butyl rubber material.

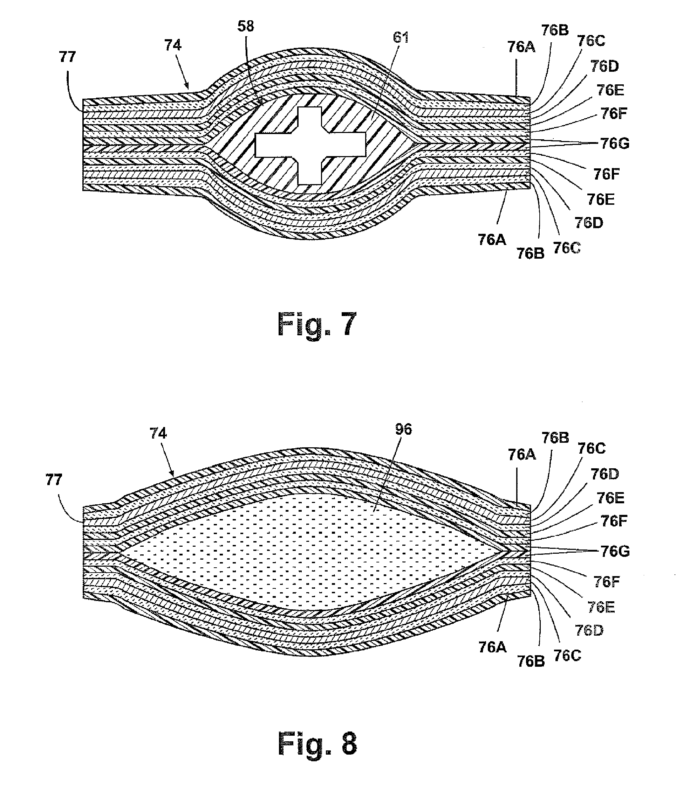

Referring to FIGS. 4 and 6, the valve assembly 50 further comprises a valve housing 58 that receives a hollow valve stem 52 having a solid plunger 62 mounted to a lower end thereof. The valve housing 58, which is preferably injection molded polypropylene material, comprises a hollow cylindrical upper portion 59 and a reduced diameter hollow lower valve body portion 61, with a fluid flow channel 60 formed therethough that is in fluid communication with the disinfecting composition 96 within the pouch 74. The exterior shape of the lower valve body portion 61 forms an eye-shaped cross-section, as shown in FIG. 7. This shape facilitates improved sealing ability between the valve housing 58 and the flexible pouch 74.

The plunger 62 is received within the protrusion 46 of the valve mounting cup 40, with the valve stem 52 extending through the dispensing opening 42. The plunger 62 comprises a central opening 63 having a closed bottom end and an open top end. Three evenly spaced vertical channels are provided on the central opening 63 and form fluid flow orifices 64 when the plunger 62 is assembled with the valve stem 52 that are in fluid communication with the hollow valve stem 52 via a space 65 formed between the bottom end of the valve stem 52 and the closed bottom of the central opening 63.

The plunger 62 is biased by a compression spring 68 to the closed position of the valve assembly shown in FIG. 4. The compression spring 68, which can be comprised of INOX AISI 302 stainless steel material, is positioned between a support rib 69 formed within the valve housing 58 and the solid plunger 62. A gasket 70 is located between the valve housing 58 and the valve mounting cup 40 and forms a valve seat for the plunger 62. The gasket 70 can be a butyl rubber. Alternative suitable gasket materials can include: buna-nitrile (buna-n), rubber, or ethylene propylene diene monomer rubber (EPDM).

The valve stem 52 can be manufactured using an injection molded polyethylene material chosen for its chemical resistivity. The plunger 62 can be manufactured using an injection molded acetal material.

As shown in FIGS. 7 and 8, the pouch 74 comprises multiple layers 76 of flexible material that are laminated together. As shown herein, the pouch comprises seven layers 76A-76G of material. The layers 76 of the pouch 74 can comprise, in order from the outermost layer to the innermost layer, a 12µm polyethylene terephthalate layer 76A, a first 3µm adhesive layer 76B, an 8µm aluminum layer 76C, a second 3µm-adhesive layer 76D, a 15µm oriented polyamide layer 76E, a third 3µm adhesive layer 76F, and a 75µm polypropylene layer 76G, all of which are hermetically sealed to the lower portion 61 of the valve housing 58, as shown in FIGS. 4 and 7. The external dimensions of the pouch 74 are nominally 180mm tall by 115mm wide (7.09 inches by 4.53 inches) and, when filled, 70mm (2.76 inches) deep. The fill volume of the pouch 74 is nominally 400ml (13.5 fluid oz.). The outer edges of the layers 76 are sealed by a heat seal bonding process that uses heat and pressure to permanently bond the edges of the layers 76 to form a hermetically sealed edge 77 on the pouch 74. The pouch 74 is subsequently sealed to the valve housing 58 by a heat seal bonding process that uses heat and pressure to permanently bond the pouch 74 to the valve housing 58. It is within the scope of the invention for the pouch 74 to be comprised of different or additional layers. It is also within the scope of the invention for the pouch 74 to have any number of layers made from any suitable material.

A suitable valve and pouch system can be purchased from SeaquistPerfect Dispensing, Cary, Illinois.

Referring to FIG. 4, the actuator 80 comprises a sidewall 81 with a circular base 92 that has a larger diameter than a top surface 94. The top surface 94 further includes a curved depression 88 suitable for mating to a user's fingertip. Extending vertically downward from the top surface 94 is a hollow cylinder 90 having a spray tip orifice 82 that is surrounded by a conically-shaped cut-out 86 formed in the sidewall 81. The hollow cylinder 90 fluidly couples the actuator 80 to the valve stem 52, thereby creating a fluid connection between the spray tip orifice 82 and the flexible pouch 74 containing the disinfecting composition 96. The spray tip orifice 82 is surrounded by a conically-shaped cut-out 86 formed in the sidewall 81, which has a terminal aperture 84 defined in the side wall 81.

In one embodiment, the shape of the spray tip orifice 82 comprises a circular through-hole with diameter of 0.51mm (0.020 inches), which has been found to be effective for application of the disinfecting composition 96 in a relatively small diameter for treating small stains and spills on the surface to be cleaned. The spray tip orifice 82 can comprise any number of alternate shapes depending on the desired spray pattern (for example straight line stream, fan shaped, conical patterns, and the like). A combination of the size of the spray tip orifice 82, the size of the terminal aperture 84, and the pressure of the gas propellant 98 can be optimized to achieve the desired spray flow rate and spray pattern of the disinfecting composition 96. The spray rate can be 5.5 grams/second (0.19 ounce/second) of disinfecting composition, with a range of 5.0 to 6.0 grams/second (0.18 to 0.21 ounce/second) and the preferred spray pattern as measured at roughly 61cm (24 inches) from the target surface to produce a "forceful stream".

Since the chemical composition of the invention contains a disinfectant, as will be described more fully herein, it should be understood that all surfaces of the dispenser 10 that come into contact with the disinfecting composition can be manufactured from materials selected for their known resistance to the components of the disinfecting composition, such as hypochlorite and quaternary ammonium compounds. For example, the actuator 80 can comprise an injection molded acetal resin. However, other materials can be used to manufacture the components of the dispenser 10, depending on the disinfecting composition 96 used with the dispenser 10.

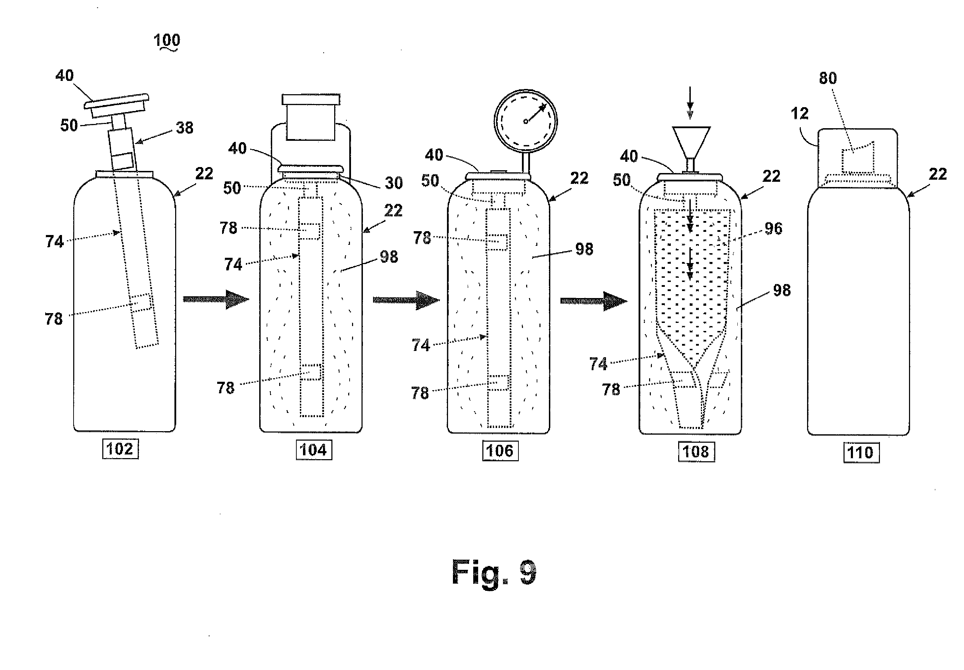

FIG. 9 illustrates a method 100 for assembling and filling the pressurized dispenser 10 in schematic form. Prior to installation in the container 22 and filling with disinfecting composition, the pouch 74 can be rolled into tube form and secured in this rolled form near the top and bottom edges with commonly known perforated adhesive tape 78, as shown in Fig. 4. This compact rolled form allows easy installation of the laminated pouch 74 into the open end 28 of the container. The method 100 begins in step 102, with the placement the pouch-on-valve assembly 38 in the container 22. The rolled pouch 74 is inserted through the open end 28 and the valve mounting cup 40 is loosely placed on the bead 30. In step 104, the propellant gas 98 is injected into the container 22 around the rolled pouch 74. Examples of suitable propellant gases are nitrogen and compressed air due to their inert nature and low-impact on the environment as opposed to traditional propellants that are composed of volatile organic compounds (VOCs). The total VOC content for this improved pressurized design can be 0 or within the range of roughly 0-2% by weight. Typical disinfectant cleaners often have a total VOC content up to 70% or more.

The pressure level during gas injection in step 104 is controlled to a predetermined level, for example to a preferred pressure level in the range of 35 to 45 psig (pound-force per square inch gauge). This predetermined pressure level is determined experimentally to ensure that the final container pressure is such that it delivers the desired spray characteristics, meets container safety standards, and is in compliance with all government regulations related to the manufacture and shipment of pressurized containers. In step 106, the annular lip 44 on the valve mounting cup 40 is permanently crimped onto the bead 30 while maintaining the propellant gas 98 in a pressurized state. In step 108, the disinfecting composition 96 is pressure-filled through the valve assembly 50 and into the pouch 74. The maximum injection pressure can be controlled in order to break the adhesive tape 78 and unroll the pouch, while avoiding rupturing the pouch 74. For example, the maximum injection pressure can be controlled to not exceed 435 psig in order to avoid pouch rupture. The preferred post-fill nominal can pressure at 70°F should be about 115 psig with a range of 110-120 psig. The filling can be controlled according to the desired net weight of the disinfecting composition 96 in the dispenser 10, whereby the pouch 74 is filled with the disinfecting composition 96 until the volume of the disinfecting composition 96 injected into the dispenser 10 reaches a predetermined net weight. In step 110, the actuator 80 is secured to the valve assembly 50 and the cap 12 is placed on the container 22.

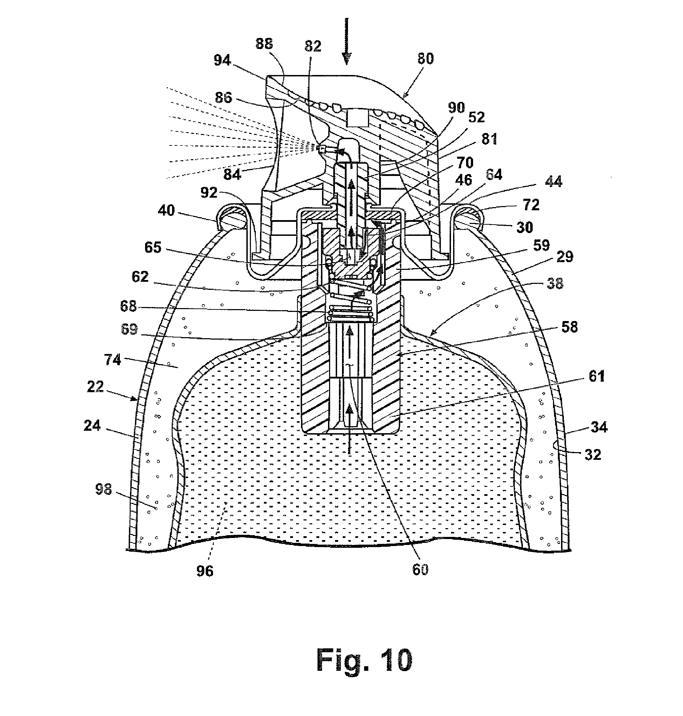

Referring to FIG. 10, in use, the disinfecting composition 96 can be dispensed onto a target surface to be cleaned by depressing the actuator 80 and subsequently creating a fluid flow path between the pouch 74 and the spray tip orifice 82. Depressing the actuator 80 forces the plunger 62 downward, compressing the spring 68, and breaking the seal between the plunger 62 and the gasket 70 to create a space between the gasket 70 and the plunger 62, thereby allowing fluid to flow from the fluid flow channel 60 to the valve stem 52 through the fluid flow orifices 64. The compressed propellant gas 98 induces a positive pressure inside the container 22 and compresses the pouch 74, thereby forcing the disinfecting composition 96 out of the pressurized container 22 to be sprayed out of the spray tip orifice 82. When downward pressure on the actuator 80 is released, the spring 68 forces the plunger 62 and valve stem 52 upward. The plunger 62 seals against the internal gasket 70 and ceases the flow of the disinfecting composition 96. A user can hold the dispenser 10 in various orientations during use, such as upright, inverted, sideways, etc., and still achieve the same dispensing action.

### Disinfecting Composition

The disinfecting composition according to the invention comprises one or more disinfecting agents, one or more optional solvents, one or more surfactants and a carrier. Additional components such as a preservative, a stabilizer/pH controller, a chelating agent, a fragrance, or any combination thereof may also be included. The disinfecting composition can be filled into the pouch 74 of the pressurized dispenser 10 according to the method 100 given above; however, it is understood that the disinfecting composition of the invention can be used with other types of dispensers.

The disinfecting composition of the present invention includes at least one disinfecting agent selected from the group comprising hypochlorites and quaternary ammonium compounds. Preferably the disinfecting agent is bleach, which has sodium hypochlorite as the active component.

The inventive disinfecting composition can also include one or more solvents, such as an alcohol. One example of a suitable solvent is ethanol. Alternatively, the disinfecting composition can be formulated without any solvents, thereby eliminating VOCs from the composition. Eliminating VOCs from the disinfecting composition can make the composition more environmentally friendly.

The inventive disinfecting composition can also include one or more surfactants. Examples of suitable surfactants include anionic, cationic, nonionic and zwitterionic surfactants. Non-limiting examples of suitable anionic surfactants include alcohol sulfates and sulfonates, alkyl and alkylaryl sulfonates, sulfonated amines and amides and sarcosinates. The surfactants may contain branched or linear components.

Deionized or Reverse Osmosis (RO) water has several advantages as a suitable carrier for the inventive disinfecting composition. The use of deionized water reduces contamination of the disinfecting composition by trace metals that could trigger activation of the disinfecting agent inside the container prior to use. Premature activation of the disinfecting agent could reduce the cleaning efficacy of the disinfecting composition and create an undesirable increase in internal can pressure due to a reaction between the disinfecting agent and the contaminants. An additional advantage associated with using deionized water as the carrier is that it evaporates with little or no residue after delivering the disinfecting composition to the surface to be cleaned.

In an alternate embodiment, the disinfecting composition can be a foaming or foamable composition. A foamable disinfecting composition can be achieved through the addition of a foaming agent or by selecting a suitable surfactant. Additionally, the spray character of the disinfecting composition can be optimized for the generation of foam.

In another alternate embodiment, the disinfecting composition can be a zero VOC formulation. The zero VOC formulation can be achieved by eliminating the VOC solvent system from the composition and replacing it with deionized water and through the use of non-VOC containing propellants such as air or nitrogen.

The pressurized dispenser and disinfecting solution described herein provides several advantages over previous dispensers and disinfecting solutions. One such advantage is the ability to provide a pressurized disinfecting solution, such as a solution containing hypochlorite or quaternary ammonium compounds, in a single pressurized dispenser. A pressurized dispenser provides a number of benefits over other types of dispensers such as ease of use, thorough coverage and the ability to dispense the solution at any angle. This can decrease strain on the user during use, which can be beneficial in industrial and institutional settings, such as a janitorial service, where a user may spend long periods of time cleaning and disinfecting surfaces.

The materials used to form the pouch can be selected to minimize the interaction between components of the disinfecting solution, such as hypochlorite or quaternary ammonium compounds, and the pouch. This results in a more stable disinfecting solution and decreased degradation of the disinfecting solution and the container it is stored in as compared to more traditional metal-based aerosol dispensers.

Yet another advantage of the pressurized dispenser is the ability to use non-aerosol formulas with the disinfecting solution package described herein to provide a user with a pressurized product. All disinfecting solutions sold in the United States are required to be registered with the EPA and requires the registrant to conduct costly and time consuming testing that proves efficacy and stability. Oftentimes, companies will register their formulas with the EPA and then allow other companies to sub-register the formula, for a fee, and put their label on the product. The vast majority of the formulas available for sub-registration are non-aerosol formulas, with only a few aerosol formulas available for sub-registration. The advantage of the pressurized dispenser described herein is that any of the non-aerosol formulas that are compatible with the pouch of the pressurized dispenser could be sub-registered and stored in the pressurized dispenser without altering the formula. This provides the manufacturer with more options to meet the needs of their consumers, while still providing consumers with the benefits of a pressurized dispenser.

Another advantage of the inventive dispenser and a disinfecting solution package that can include hypochlorite or quaternary ammonium compounds, as described herein, is the impact of the package on the environment and human health. Societal pressure is increasing in both the market place and in the government to develop products that have minimal impact on the environment and human health. Large retailers continue to pressure vendors and suppliers to provide products that reduce waste and have a less of a negative impact on the environment and human health.

The inventive dispenser and disinfecting solution described herein provides a dispenser for delivering a disinfecting solution, such as a solution containing hypochlorite or quaternary ammonium compounds, to a surface to be cleaned under pressure without the disadvantages of traditional aerosol dispensers. Aerosol dispensers that utilize propellants such as volatile organic compounds and compressed gasses like nitrous oxide can contribute to ground-level ozone levels.

The inventive pressurized dispenser described herein relies on air or nitrogen gas, both having minimal environmental impact, to pressurize the disinfecting solution. In addition, the disinfecting solution can also be provided free of volatile organic compounds, resulting in a dispenser and disinfecting solution package that has minimal impact on the environment and human health.

The disinfecting solution that includes hypochlorite or quaternary ammonium compounds, for example, described herein provides a disinfecting composition that is stable under pressure, can contain little or no VOCs and can be provided in a single, pressurized dispenser for delivery to a surface to be cleaned under pressure and at any angle. The disinfecting solution package described herein has the additional benefit of containing no VOCs in a package that meets high standards for environmental and human health impacts while performing just as well or better than traditional cleaners that do not have the same environmental and human health benefits.

While this invention has been specifically described in connection with certain specific embodiments thereof, it is to be understood that this is by way of illustration and not of limitation. Reasonable variation and modification are possible within the scope of the foregoing description and drawings without departing from the scope of the invention, which is defined in the appended claims.

## Claims

1. A disinfecting solution package comprising:
a dispensing container having a body with a closed bottom and an open upper end forming a neck and a dispensing valve mounted in the neck;
a flexible pouch mounted within the container having an open upper end that is sealed to the dispensing valve;
a disinfecting composition including a disinfecting agent within the flexible pouch; and
a pressurized gas between the container body and the flexible pouch to pressurize the disinfecting solution within the flexible pouch.

2. The disinfecting solution package according to claim 1 wherein the flexible pouch is essentially inert with respect to the disinfecting agent.

3. The disinfecting solution package according to claim 2 wherein the flexible pouch comprises multiple laminated layers, and wherein at least one of the multiple layers is a metallic layer.

4. The disinfecting solution package according to claim 3 wherein the flexible pouch further includes at least one of a polyamide layer, a polyethylene terephthalate layer and a polypropylene layer.

5. The flexible pouch according to claim 3 further comprising an adhesive between at least two of the multiple layers.

6. The disinfecting solution package according to claim 2 wherein the flexible pouch comprises multiple laminated layers, comprising:
a) a polyethylene terephthalate layer;
b) an aluminum layer;
c) a polyamide layer;
d) a polypropylene layer; and
e) an adhesive layer between each of the layers a, b, c, and d.

7. The disinfecting solution package according to claims 1 or 6 wherein the disinfecting agent is selected from the group consisting of hypochlorite and quaternary ammonium compounds.

8. The disinfecting solution package according to claim 7 wherein the flexible pouch is essentially inert with respect to the hypochlorite and quaternary ammonium compounds.

9. The disinfecting solution package according to claim 1 and further comprising at least one of an aqueous carrier, a non-biodegradable surfactant, a biodegradable surfactant, an organic solvent and mixtures thereof.

10. The disinfecting solution package according to claim 1 wherein at least one of the cleaning composition and the pressurized gas is free of volatile organic compounds.

11. The disinfecting solution package according to claim 10 wherein the pressurized gas is selected from at least one of air and nitrogen.

12. A method for making a disinfecting solution package comprising:
sealing a flexible pouch having an open end to a dispensing valve;
positioning the flexible pouch within an open top container with the dispensing valve in registry with the open top of the container, to provide a space between the flexible pouch and an inside surface of the container;
sealing the dispensing valve to the open top of the container;
injecting a gas into the space between the flexible pouch and an inside surface of the container to pressurize the space; and
filling the flexible pouch with a disinfecting solution containing a disinfecting agent.

13. The method according to claim 12 further comprising forming the flexible pouch from material that is essentially inert with respect to the disinfecting agent.

14. The method according to claim 13 wherein the flexible pouch comprises a lamination of multiple layers comprising:
a) a polyethylene terephthalate layer;
b) an aluminum layer;
c) a polyamide layer;
d) a polypropylene layer; and
e) an adhesive layer between each of the layers a, b, c, and d.

15. The method according to claim 13 or 14 wherein the disinfecting agent is selected from the group consisting of hypochlorite and quaternary ammonium compounds.
